Europäisches Patentamt

European Patent Office

Office européen des brevets

(19)

(11) **EP 1 357 497 A1**

(12)   **EUROPEAN PATENT APPLICATION**

(43) Date of publication:
      **29.10.2003  Bulletin 2003/44**

(51) Int Cl.⁷: **G06F 17/60**

(21) Application number: **02018909.8**

(22) Date of filing: **23.08.2002**

(84) Designated Contracting States:
     **AT BE BG CH CY CZ DE DK EE ES FI FR GB GR
     IE IT LI LU MC NL PT SE SK TR**
     Designated Extension States:
     **AL LT LV MK RO SI**

(30) Priority: **25.04.2002  JP  2002123397**

(71) Applicant: **Hitachi, Ltd.
     Chiyoda-ku, Tokyo 101-8010 (JP)**

(72) Inventors:
     • **Mitsukuni, Koshichiro, c/o Hitachi, Ltd., I.P.G.,
       Tokyo 100-8220 (JP)**

     • **Koyama, Mitsuo, c/o Hitachi, Ltd., I.P.G.,
       Tokyo 100-8220 (JP)**
     • **Nakamura, Yuichi, c/o Hitachi, Ltd., I.P.G.
       Tokyo 100-8220 (JP)**
     • **Takahashi, Naoki, c/o Hitachi, Ltd., I.P.G.
       Tokyo 100-8220 (JP)**

(74) Representative: **Strehl Schübel-Hopf & Partner
     Maximilianstrasse 54
     80538 München (DE)**

(54)   **Stock planning method**

(57)     Conventional techniques are associated with some problem on stock and goods delivery depending upon a change in demand. Because of this problem, it is necessary to have a large quantity of stock as safety stock. A stock planning server (100) calculates a quantity of necessary stock by using the demand and supply characteristics of goods and the lead time and planning cycle in a distribution route of the goods supplied from a production management server (200), a transport management server (300) and a sales management server (400).

FIG.1

EP 1 357 497 A1

## Description

BACKGROUND OF THE INVENTION

The present invention relates to a technique of stock management of goods, and more particularly to creating a stock plan for managing production and transport more efficiently.

As a conventional technique of stock management of goods, the technique disclosed in the Publication JP-A-8-235274 is known. This conventional technique utilizes both a "manufacturing resource planning (MRP) system and a "just-in-time (JIT) system". More specifically, this Publication discloses a stock management system: although the MRP system is incorporated, JIT items can be dealt with; by making stock forecast of JIT items, the adequacy of "signboard (kanban) numbers" and "order quantities" can be verified; and by shortening a renewal time of stock standard values ("signboard numbers" and "order quantities"), the renewal cycle can be shortened so that supply activities following a market change can be made.

SUMMARY OF THE INVENTION

The above-described conventional technique is, however, associated with some problem on stock and goods delivery depending upon a change in demand. Because of this problem, it is necessary to have a large quantity of stock as safety stock.

This results from that the conventional technique is a mere aggregation of the "MRP system" and the "JIT system". According to the "MRP" system, production quantities are leveled and an actual stock of inventory is adjusted by a changing demand quantity. From this reason, the "MRP" system tries to reduce an actual stock of inventory by making high precision demand forecast. However, if the precision of demand forecast is not high, an excessive or insufficient stock of inventory becomes actual.

According to the "JIT" system, actual stocks of inventory are leveled and production quantities are adjusted by a changing demand quantity. Since the "JIT" system does not require to have a safety stock for a demand change, if the precision of signboard size is poor, there occur lacking items and delivery delay.

Since the above-described conventional technique is a mere aggregation of the "MRP" system and the "JIT" system, the problems of an excessive or insufficient stock, lacking items and delivery delay cannot be solved at the same time.

An object of the invention is to solve the above-described problems and to stabilize stocks at a predetermined level by reducing lacking/items and delivery delay.

In order to solve the above-described problems, according to the invention, a quantity of necessary stock is calculated from demand and supply characteristics of goods by taking into consideration a lead time and a planning cycle in a distribution route of goods.

The lead time means a goods delivery period from the goods supplier to the demand side including a sales shop. The planning cycle means the period of stock planning to be periodically performed.

The supply characteristics of goods include a demand quantity moving average which is an average of demand quantities in the unit of a predetermined period, and a standard deviation. The supply characteristics include a safety stock coefficient.

The invention includes calculating a requested re-order quantity from a quantity of necessary stock. In this case, calculations include calculating the quantity of necessary stock and requested re-order quantity at the calculation time as well as calculating the future quantity of necessary stock and future requested re-order quantity. The invention also includes calculating the quantity of necessary stock and requested re-order quantity by taking into consideration the lead time which is a distribution period up to the sales shop.

Other objects, features and advantages of the invention will become apparent from the following description of the embodiments of the invention taken in conjunction with the accompanying drawings.

BRIEF DESCRIPTION OF THE DRAWINGS

Fig. 1 is a diagram showing the structure of a system according to an embodiment of the invention.
Fig. 2 is a flow chart illustrating a process to be executed by the system of the invention.
Fig. 3 is a diagram showing an example of an actual sales DB 410.
Fig. 4 is a diagram showing an example of a stock management DB 420.
Fig. 5 is a diagram showing an example of a past actual sales DB 110.
Fig. 6 is a diagram showing an example of a delivery DB 130.
Fig. 7 is a diagram showing an example of a stock planning table 120.
Fig. 8 is a diagram showing an example of a safety stock coefficient calculation table 150 at a service factor of 95 %.
Fig. 9 is a diagram showing an example of a production plan - actual production DB 210.
Fig. 10 is a diagram showing an example of a transport management DB 310.
Fig. 11 is a flow chart illustrating a process to be executed by the system of the embodiment, following the flow chart shown in Fig. 2.
Fig. 12 is a flow chart illustrating a process to be executed by the system of the embodiment, following the flow chart shown in Fig. 11.
Fig. 13 is a flow chart illustrating a process to be executed by the system of the embodiment, following the flow chart shown in Fig. 12.

## DESCRIPTION OF THE EMBODIMENTS

An application field of the embodiment will be first described. The embodiment is applied to stock planning for the distribution route in which goods manufactured by a maker are transported by a transport means of a transport company to a sales shop to sale the goods. The quantities of effective stocks at a production company, transport company and sales shop are calculated. There may be a plurality of makers, transport companies and sales shops which deal with object goods.

The maker manages its production and grasps its production state by using a production management server 200 to be described later. The transport company manages its transport and its transport state by using a transport management server 300 to be described later. The sales shop manages its sales and its sales state by using a sales management server 400 to be described later.

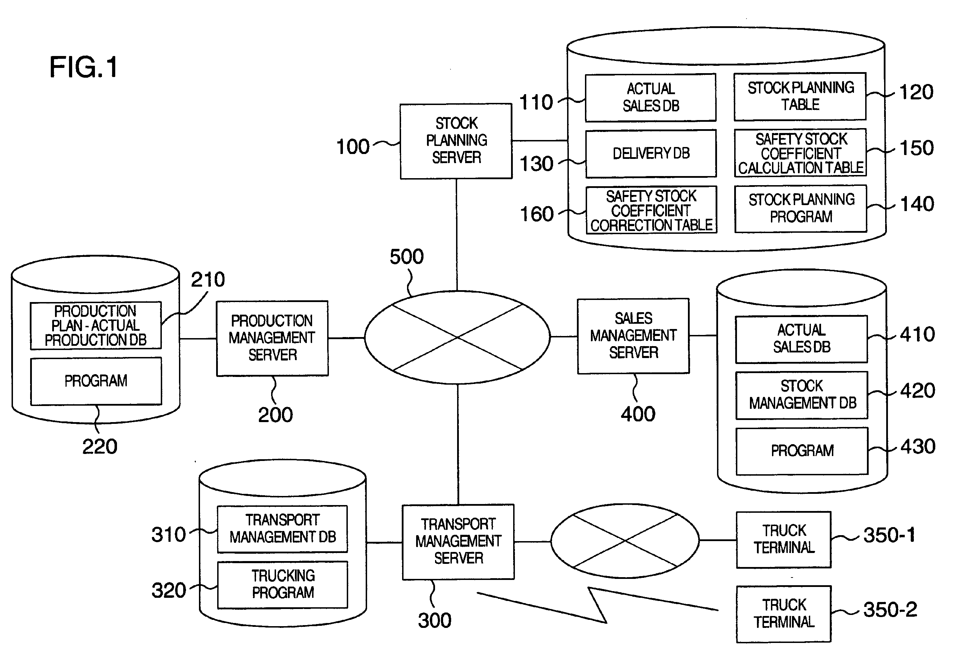

The embodiment of the invention will be described with reference to the accompanying drawings. Fig. 1 is a diagram showing the structure of a stock planning system according to the embodiment. The stock planning system has a stock planning server 100, the production management server 200, transport management server 300 and sales management server 400, respectively interconnected by a network 500. A plurality of servers may be used for each of these servers. The numbers of production management servers 200, transport management servers 300 and sales management servers 400 are determined by the topology of a distribution route.

The stock planning server 100 may be integrated with any one of the production management server 200, transport management server 300 and sales management server 400. Each of the stock planning server 100, production management server 200, transport management server 300 and sales management server 400 may be a computer having a general architecture and processes in accordance with a program stored in a storage device.

Truck terminals 350 can be used at a transport means such as a truck and a ship, and may be connected either to the network 500 or another network connected to the transport management server 300. The truck terminal 350 may be a computer having a general architecture and executing processes in accordance with a program stored in a storage device.

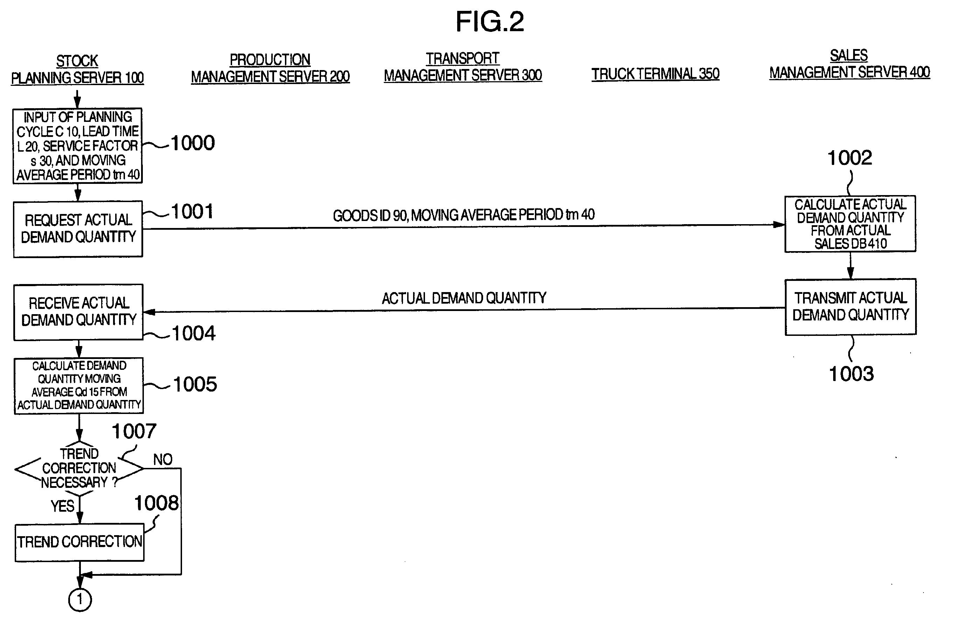

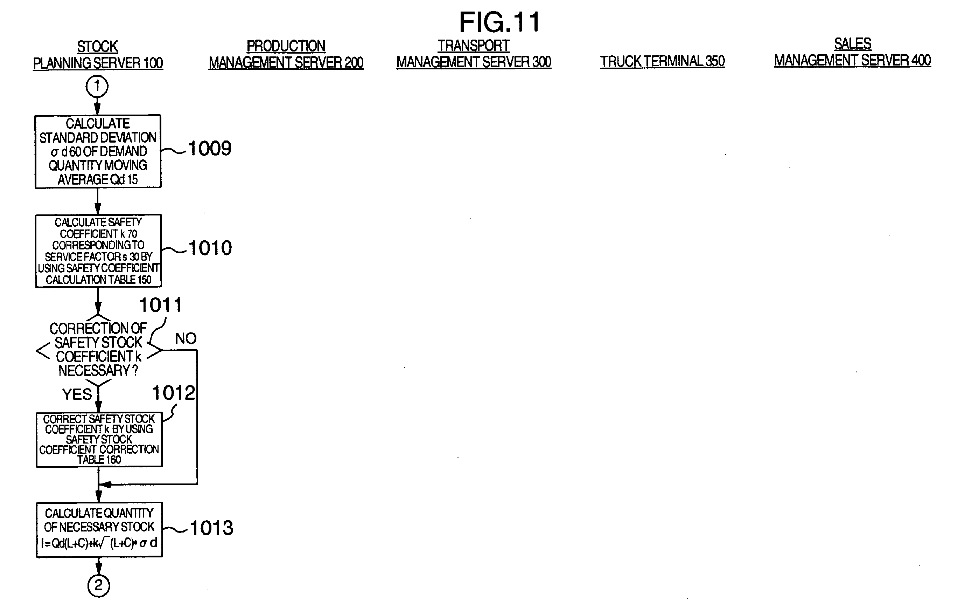

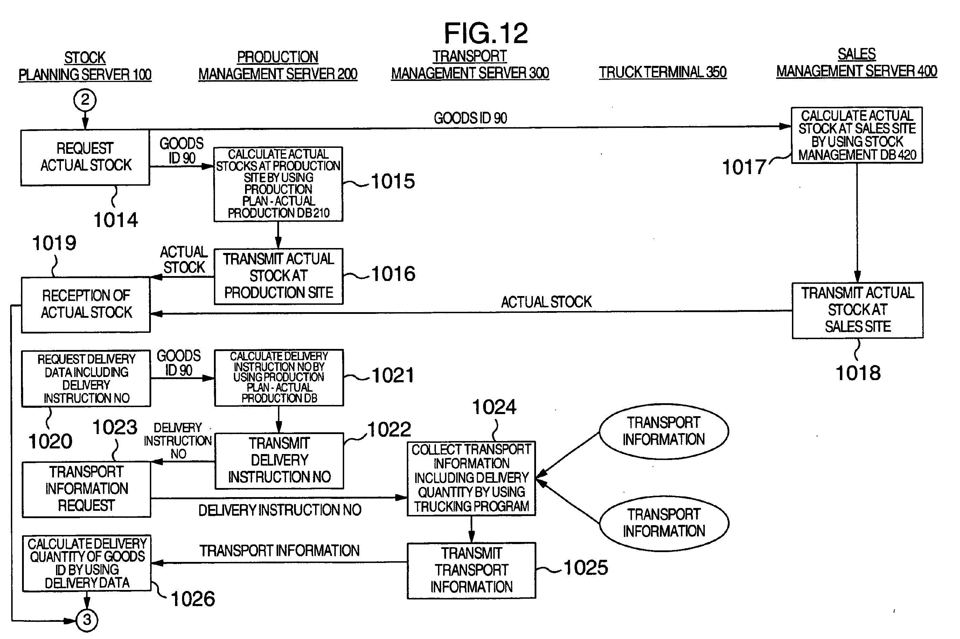

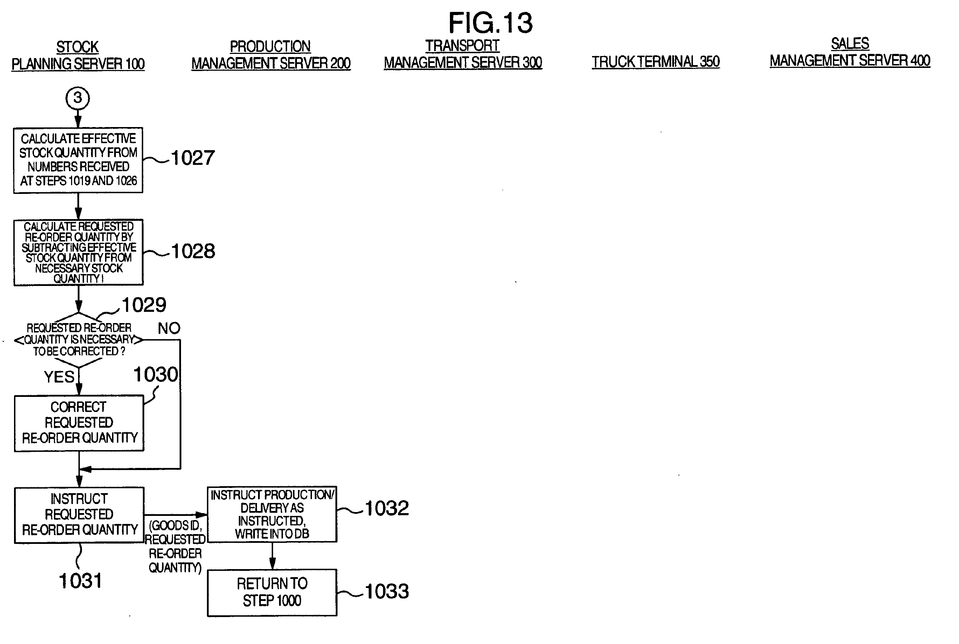

Next, processes to be executed by the embodiment will be described with reference to the flow charts shown in Figs. 2, 11, 12 and 13.

First, at Step 1000 a goods ID 90 for identifying goods, a planning cycle C 10, a lead time L 20, a service factor s 30 and a moving average period tm 40 are input to the stock planning server 100. This information is input by a stock manager who is a user of the stock planning server.

This information may correspond to the contents of goods sales strategies made by the stock manager. The planning cycle C 10 has a value satisfying a goods sales plan and representing that "the goods are supplied at what time cycle". The lead time L 20 indicates a time taken for goods to be distributed from the production site to the sales site. The service factor s 30 has a value satisfying the goods sales plan and representing that how many lacking goods are permitted.

As will be later described, the information input at Step 1000 may be manually input, or actual values of distribution may be input as such information.

Next, at Step 1001 the stock planning server 100 requests the actual demand quantity of the goods during a predetermined period from the sales management server 400. For example, the stock planning server 100 transmits request information containing the goods ID 90 and moving average period tm 40 to the sales management server 400.

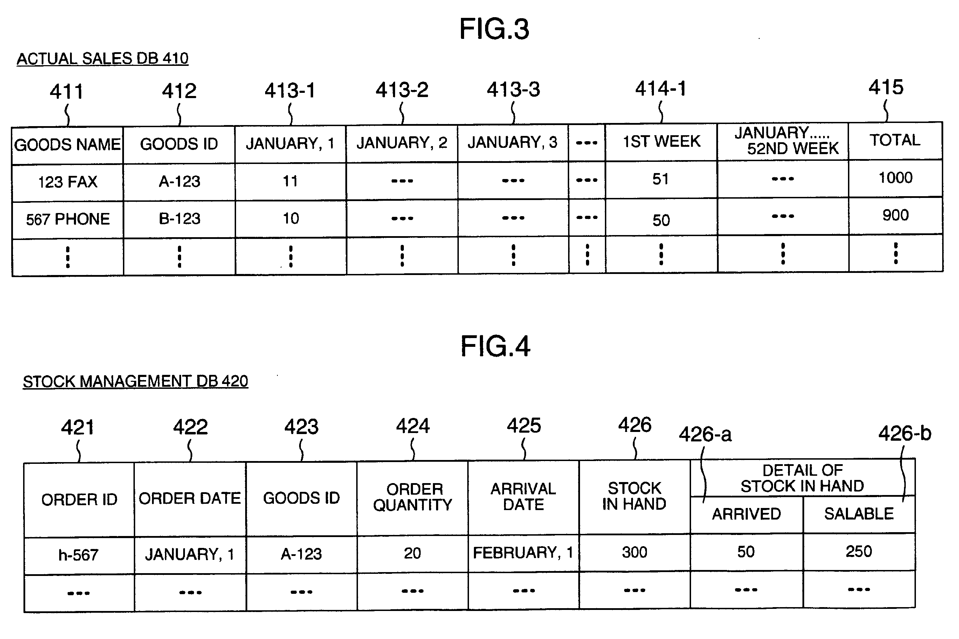

Next, at Step 1002 the sales management server 400 calculates the actual demand quantity corresponding to the transmitted request information. By using the received goods ID 90 as a search key, the sales quantity during the moving average period tm 40 is searched from the actual sales DB 410 shown in Fig. 3 to calculate actual demand quantities.

Next, at Step 1003 the sale management server 400 transmits the calculated actual demand quantities to the stock management server 100.

Next, the stock management server 100 calculates the demand quantity moving average Qd 15 from the actual demand quantities received at Step 1004. The demand quantity moving average Qd 15 is an average of actual demand quantities during predetermined partial moving average periods constituting the moving average period tm 40. For example, if the moving average period tm 40 is one year, the partial moving average period is one week. In this case, the demand quantity moving average Qd 15 is calculated by separating the actual demand quantities into 52 weeks of the year. The demand quantity moving average Qd 15 may be calculated from the following equation (1).

$$Qd = \Sigma(Qd(i))/tm \qquad (1)$$

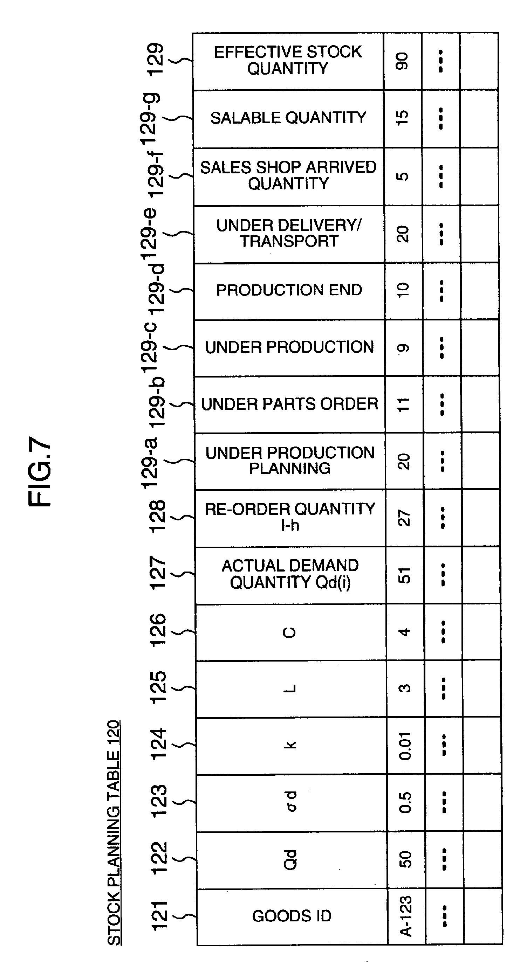

The stock planning server 100 enters the calculated demand quantity moving average Qd 15 in the cell of the column 122 of the stock planning table 120 shown in Fig. 7, the cell corresponding to the goods ID 90.

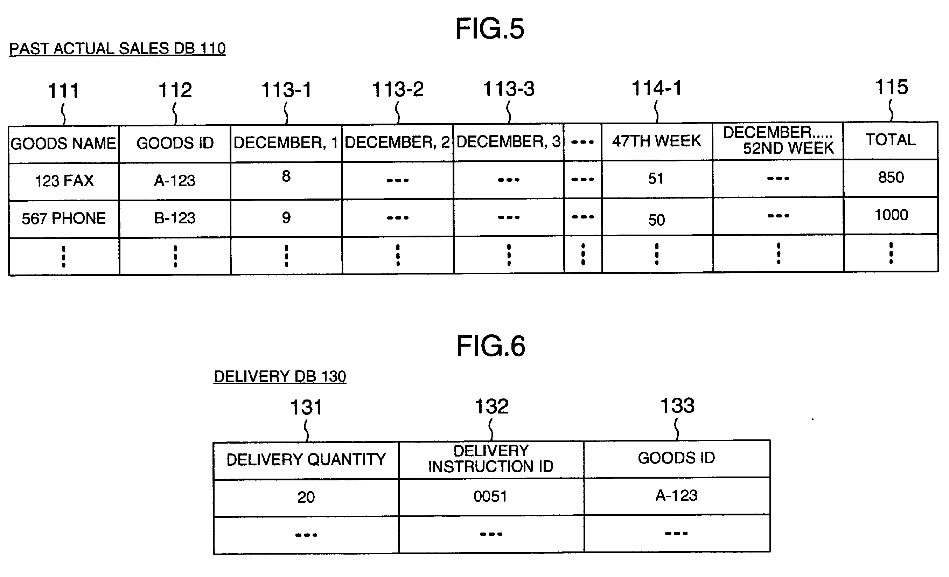

The sales management server 400 may calculate the sales quantity during the latest partial moving average period at Step 1002 and transmit the calculated sales quantity to the stock management server 100 at Step 1003. In this case, the stock planning server 100 calculates the demand quantity moving average Qd 15 by using the received sales quantity and the sales quantities during the partial moving average periods in the past stored in the past actual sales DB 110 shown in Fig. 5.

Step 1005 may be executed at the sales management server 400. Namely, the sales management server 400 calculates the demand quantity moving average Qd 15 and sends it to the stock planning server 100.

Next, at Step 1007 the stock planning server 100 judges whether trend correction is necessary. If necessary, the trend correction is performed at Step 1008 to thereafter advance to Step 1009. The trend correction corrects the demand quantity Qd 15 in accordance with an increase/decrease trend of demands. In the judgement at Step 1007, if the increase/decrease trend is over a predetermined value, then it is judged that the trend correction is necessary. The details of the trend correction will be later described.

Next, at Step 1009 the standard deviation σd 60 of the demand quantity moving average Qd 15 is calculated. The standard deviation σd 60 may be calculated from the following equation (2).

The stock planning server 100 stores the calculated demand quantity Qd 15 in the field of the column 123 of the stock planning table 120 shown in Fig. 7, the field corresponding to the goods ID 90.

$$I = Qd(L + C) + k\sqrt{(L + C)}\sigma d \text{ , then}$$

$$\sigma d = \sqrt{(\Sigma(Qd - Qd(i))^2/(tm - 1))} \qquad (2)$$

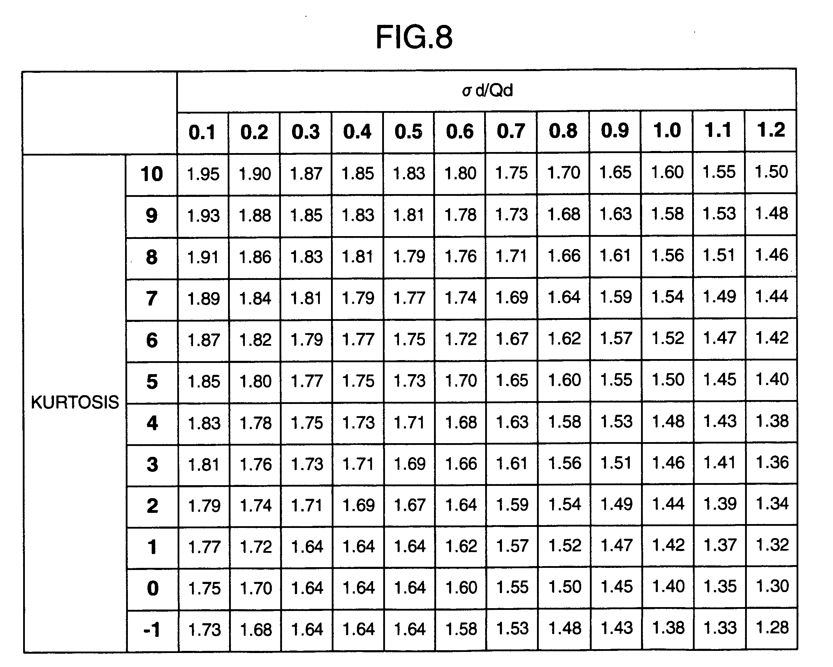

Next, at Step 1010 the stock planning server 100 calculates a safety stock coefficient k 70 from the service factor s 30 by using the safety coefficient calculation table 150 shown in Fig. 8. Namely, the safety stock coefficient k 70 in the safety coefficient calculation table 150 corresponding to the service factor s 30 input at Step 1000 is selected.

Next, at Step 1011 the stock planning server 100 judges whether the safety stock coefficient k 70 calculated at Step 1010 is necessary to be corrected. If necessary, the correction is made by using a safety stock coefficient correction table 160.

In the judgement at Step 1011, whether the correction is necessary is judged from a distribution of the demand quantity moving average Qd 15. Namely, if at least one of the kurtosis and σd/Qd is over predetermined threshold values, it is judged that the correction is necessary. The reason for this is that a quantity of necessary stock is determined on the assumptions that the demand has generally a normal distribution. However, an actual demand distribution is not always a normal distribution, but the skirt may become broader than the normal distribution or the kurtosis becomes higher than the normal distribution. In these cases, the service factor does not match actual demand.

At Step 1012 by using the safety stock coefficient correction table 160 corresponding to the expected service factor s 30, the safety stock coefficient is corrected to be larger for the demand having a higher kurtosis than its threshold value, and corrected to be smaller for the demand having a larger σd(/Qd) than its threshold value.

Next, at Step 1013 the stock planning server 100 calculates a quantity I of necessary stock by using a sum of the planning cycle C 10 and lead time L 20, the demand quantity moving average Qd 15, safety stock coefficient k 70 and standard deviation σd. Namely, the quantity I of necessary stock is calculated from the following equation (3).

$$I = Qd(L + C) + k\sqrt{(L + C)}\cdot\sigma d \qquad (3)$$

Next, the stock planning server 100 calculates an effective stock quantity in order to calculate the requested re-order quantity. The process at Step 1014 which is an example of calculating the effective stock quantity will be described in the following. The effective stock quantity is a sum of the actual stock quantity and remaining order. Therefore, the effective stock quantity is the order quantity not still accepted (arrived) among the order quantity. The effective stock quantity may be calculated by subtracting the quantity accepted (arrived) from the order quantity.

First, at Step 1014 the stock planning server 100 requests the actual stock quantities from the production management server 200.and sales management server 400. The stock management server 100 transmits actual stock request information including the goods ID 90 to the production management server 200 and sales management server 400.

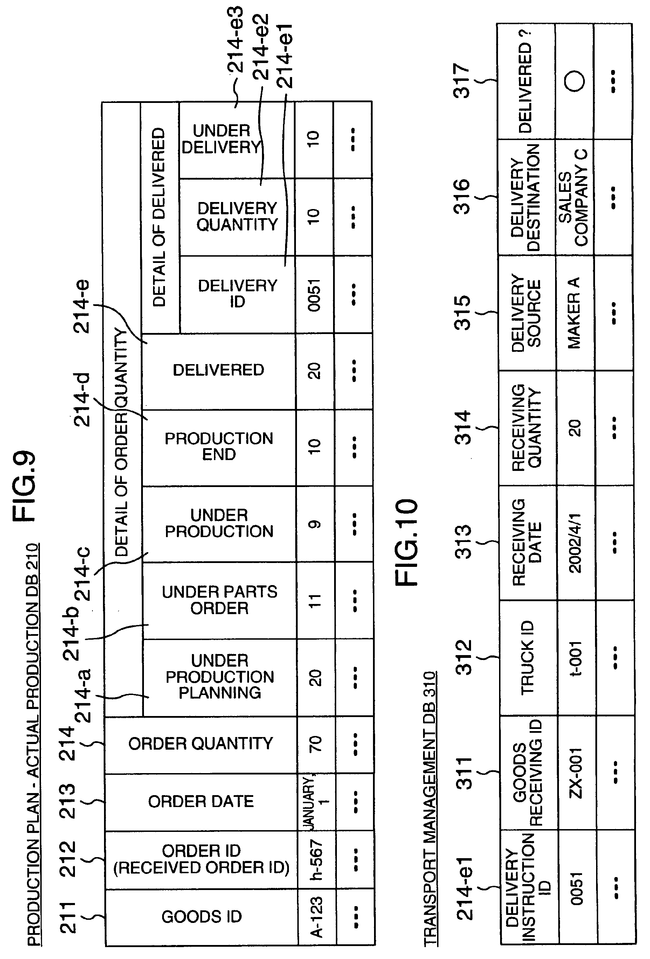

Next, at Step 1015 the production management server 200 searches the actual stock of the maker corresponding to the goods ID 90 from the production plan - actual production DB 210 shown in Fig. 9. For example, the number in the order quantity (accepted order quantity) 214 corresponding to the goods ID 90 is output as the search result. The quantity order 214 may be a sum of values in 214-a to 214-e instead of the search result. The order quantity 214 indicates the order quantity of production instructed to or by the maker, and the items 214-a to 214-e show the contents of the order quantity 214.

At Step 1017 the sales management server 400 searches from the stock management DB 420 shown in Fig. 4 the actual stock of the maker (company) corresponding to the goods ID 90 transmitted from the stock planning server 100 at Step 1014. For example, the quantity 426 of stock in hand corresponding to the goods ID 423 corresponding to the transmitted goods ID 90 is output as the search result.

Next, at Step 1019 the stock planning server 100 receives the actual stock transmitted from the production management server 200 at Step 1016 and the actual stock transmitted from the sales management server 400 at Step 1018. Step 1019 may be divided into two Steps corresponding to the number of transmission sources.

At Step 1020 the stock planning server 100 requests the delivery data including the delivery ID corresponding to the goods ID from the production management server 200. For example, the stock planning server 100 transmits delivery data request information including the goods ID 90 to the production management server 200.

Next, at Step 1021 the production management server 200 searches from the production plan - actual production DB 210 the delivery ID corresponding to the goods ID 90 and the delivery quantity. Namely, the production management server 200 searches from the item 211 the goods ID corresponding to the transmitted goods ID 90, and searches from the item 214-e1 the delivery ID in the same column corresponding to the searched goods ID.

Next, at Step 1022 the production management server 200 transmits information to the stock planning server 100, the information including the searched delivery ID and delivery quantity and the corresponding goods ID.

Next, at Step 1023 the stock planning server 100 requests transport information which is the information on the goods under transport corresponding to the delivery ID transmitted from the production management server 200. For example, the stock planning server 100 transmits transport information request information including the delivery ID to the transport management server 300.

Next, at Step 1024 the transport management server 300 searches transport information corresponding to the delivery ID and including the delivery ID and transport quantity (goods receiving quantity). For example, by using a trucking process program 320, the transport management server 300 collects goods receiving IDs under transport from truck terminals 350 installed in respective transport means. Among the collected goods receiving IDs, transport information related to the delivery ID transmitted from the stock planning server 100 is searched from the transport management DB 310 shown in Fig. 10. The transport means is a means capable of transporting goods, such as a truck, a ship and a plane. The transport management server 300 may collect at predetermined timings the information to be registered from each truck terminal 350 to the transport management DB 310, and in response to a transport information request, the transport information is searched from the transport management DB 350.

Next, at Step 1025 the transport management server 300 transmits the transport information to the stock planning server 100.

Next, at Step 1026 the stock planning server 100 calculates the delivery quantity for the goods ID from the transmitted transport information by using the delivery DB 120 shown in Fig. 6. Namely, the stock planning server 100 identifies the goods ID corresponding to the goods ID 90 from the delivery IDs contained in the transmitted transport information and searches the delivery (order) quantity from the item 131.

Next, at Step 1027 the stock planning server 100 calculates the effective stock quantity by adding the actual stock received at Step 1019 and the delivery quantity calculated at Step 1026.

The effective stock quantity may be calculated in the following manner. As a first substitute approach, the stock planning server 100 requests the effective stock quantity from the sales management server 400. For example, the stock planning server 100 transmits effective stock quantity request information including the goods ID 90 to the sales management server 400. Next, the sales management server 400 calculates the order quantity corresponding to the goods ID 90 from the stock management DB 420. Namely, the sales management server 400 checks from the item 425 whether the goods corresponding to the goods ID 90 arrived. If arrived, the quantity 426 of stock in hand is used as the effective stock quantity. If a plurality of items corresponding to the goods ID 90 exists in the stock management DB 420, the total quantity in these items is used as the effective stock quantity. The stock planning server 100 receives the effective stock quantity from the sales management server 400.

As a second substitute approach, the stock planning server 100 receives from the production management server 200 the quantity 214-a under production planning,..., and the quantity 214-d of production end corresponding to the good ID 90. This information is searched by the production management server 200 from the production plan - actual production DB 210. The stock planning server 100 receives from the transport management server 300 the quantity 129-e under delivery/transport corresponding to the goods ID 90. This transport quantity may be calculated in the manner similar to Steps 1020 to 1026.

The stock planning server 100 receives from the sales management server 400 the quantity 426-a of goods arrived at the sales shop and the quantity 426-b of salable goods (or the quantity 426 of stock in hand) corresponding to the goods ID 90. The sales management server 400 searches from the stock management DB 420 the quantity 426-a of goods arrived at the sales shop and the quantity 426-b of salable goods (or the quality 426 of stock in hand) corresponding to the goods ID 90. The stock planning server 100 adds the quantity 426-a under production planning to the quantity 426-b of salable goods to use the total quantity as the effective stock quantity.

As a third substitute approach, the stock planning server 100 receives actual physical stock quantities from the production management server 200, transport management server 300 and sales management server 400. The stock planning server 100 receives a remaining order corresponding to the goods ID 90 from at least one of the production management server 200, transport management server 300 and sales management server 400. The effective stock quantity is calculated by adding the actual stock quantity to the remaining order. The stock planning server 100 may receive order state information representative of the order information including the actual stock quantity and remaining order at predetermined timings from the production management server 200, transport management server 300 and sales management server 400. In this case, the effective stock quantity is calculated from the order state information.

Next, at Step 1028 the stock planning server 100 calculates the requested re-order quantity by subtracting the effective stock quantity calculated at Step 1027 from the quantity 180 of necessary stock calculated at Step 1013.

If necessary, the stock planning server 100 judges whether the calculated requested re-order quantity is to be corrected. If it is judged to be corrected, correction is made. These processes are performed at Steps 1029 and 1030, and the details will be later given.

Next, at Step 1031 the stock planning server 100 instructs the production management server 200 to perform a re-order for the requested re-order quantity. For example, the stock planning server 100 transmits the re-order request information including the goods ID 90 and requested re-order quantity to the production management server 200. At Step 1031, the stock planning server 100 records the requested re-order quantity in the field of the item 127 of the stock planning table 120 corresponding to the goods ID.

At Step 1032 the production management server 200 performs production management in accordance with the requested re-order information.

Lastly, the flow returns to Step 100 to repeat the above-described processes. In these repeated processes, similar processes are performed in accordance with the contents of each DB updated by the processes performed earlier.

There is a time lag between when a quantity of requested re-order is calculated and when goods actually arrive at the sales shop. The stock planning server 100 calculates the demand quantity moving average Qd at Steps 1005 to 1008 in accordance with the current stock state. In order to eliminate the time lag, the quantity of necessary stock may be calculated by calculating each demand quantity moving average up to the lead time C 20. Such a demand quantity moving average can be calculated by the following methods: (1) human forecast; (2) utilizing the demand quantity moving average Qd calculated at Steps 1005 to 1008; and (3) computer forecast by the stock planning server 100 or the like. In any of these methods, in accordance with an input demand quantity moving average at each timing, an input value of each item of the stock planning table 120 is calculated and a quantity of necessary stock at each timing is sequentially calculated in accordance with the calculated input values. This calculation is made because each item at the next timing changes with the quantity of necessary stock (requested re-order quantity).

Next, the trend correction at Steps 1007 and 1008 will be described. First, at Step 1007 if the degree of a demand change with time is equal to or greater than the standard, it is judged that the trend correction is necessary. The change degree is calculated in the following manner.

First, the actual demand Qd (i) at each timing is obtained from the item 127 of the stock planning table 120. Next, the actual demand Qd(i) before a predetermined period from each timing is obtained in the similar manner. A difference between the actual demands is calculated and compared with a predetermined value. If the number of differences larger than the predetermined value is larger than a predetermined number, it is judged that the trend correction is necessary. The planning cycle C 10 is included in the period before the predetermined period from each timing. The predetermined value and number may be input from a user to the stock planning server 100.

Next, at Step 1008 the trend correction is executed. First, by using the actual demand recorded in the item 127 of the stock planning table 120, an approximate expression of the demand change during a preset period is obtained. By using this approximate expression, the demand quantity moving average Qd is corrected to obtain a demand quantity moving average at the timing of the lead time C 20. In the above manner, the trend correction is completed.

Next, correcting the requested re-order quantity at Steps 1029 and 1030 will be described. First, the judgement at Step 1029 whether the correction of the requested re-order quantity is necessary will be described.

First, (1) it is judged whether the lead time L 20 input at Step 1000 is longer than a predetermined lead time threshold value. (2) It is judged whether the standard deviation σd 60 calculated at Step 1009 is smaller than a predetermined standard deviation threshold value. (3) It is judged whether the quantity of necessary stock calculated at Step 1013 is larger than the effective stock quantity calculated at Step 1027. (4) It is further judged whether a value of the quantity of necessary stock calculated at Step 1013 subtracted by the effective stock quantity calculated at Step 1027 is larger than the demand quantity Qd 15. If the conditions (1) to (4) are satisfied, it is judged that it is necessary to correct the requested re-order quantity.

If the correction is necessary, at Step 1030 the requested re-order quantity calculated at Step 1028 is corrected to the demand quantity moving average Qd 15. Steps 1029 and 1030 may be performed before Step 1028. In this case, if it is judged at Step 1029 that the correction is necessary, the process at Step 1028 may be omitted by using the requested re-order quantity calculated at Step 1030.

According to the invention, the production quantity and stock quantity can be stabilized even if demands are fluctuated.

It should be further understood by those skilled in the art that although the foregoing description has been made on embodiments of the invention, the invention is not limited thereto and various changes and modifications may be made without departing from the spirit of the invention and the scope of the appended claims.

**Claims**

1. A stock planning method of creating with a computer (100) a stock plan of goods to be distributed on a distribution route, the method comprising:

   a step of inputting a planning cycle and a lead time of the goods;
   a step of inputting a demand quantity moving average during a predetermined period constituting a preset moving average period of the goods, the demand quantity moving average being an average of actual demand quantities indicating demand quantities of the goods during the preset moving average period;
   a step of calculating a standard deviation of the demand quantity moving average;
   a step of calculating a safety stock coefficient indicating a probability of not lacking goods by using a service factor indicating a probability of not lacking goods; and
   a step of calculating a quantity of necessary stock of the goods required by the distribution route by using a sum of the planning cycle and the lead time, the demand quantity moving average, the standard deviation and the safety stock coefficient.

2. A stock planning method according to claim 1, wherein:

   the computer is connected via a network to a sales management server (400) for managing sales of the goods; and
   said step of inputting the demand quantity moving average comprises:

      a step of transmitting to the sales management server request information including goods identification information for identifying the goods and the moving average period, the request information requesting an actual demand quantity during the moving average period of the goods;
a step of receiving the actual demand quantity from the sales management server; and
a step of calculating the demand quantity moving average by using the actual demand quantity.

3. A stock planning method according to claim 1, further comprising:

   a step of calculating an effective stock quantity on the distribution route; and
   a step of calculating a requested re-order quantity by subtracting the effective stock quantity from the quantity of necessary stock.

4. A stock planning method according to claim 3, wherein:

   the computer is connected via a network (500) to a production management server (200) for managing production of the goods and a transport management server (300) for managing transport of the goods; and
   said step of calculating the effective stock quantity calculates the effective stock quantity by receiving partial effective stock quantities from the production management server, the transport management server and the sales management server and adding the received partial effective stock quantities.

5. A stock planning method according to claim 4, wherein said step of calculating the effective stock quantity calculates the effective stock quantity including a remaining order which includes a quantity instructed to be ordered by the sales management server and a quantity instructed to be produced by the production management server.

6. A stock planning method according to claim 5, wherein said step of calculating the effective stock quantity comprises:

   a step of requesting delivery information on delivery of goods corresponding to the goods identification information to a transport organization from the production management server, the delivery information including delivery identification information for identifying the delivery;
   a step of receiving from the production management server the delivery information responding to the request;
   a step of requesting a quantity under transport corresponding to the delivery identification information from the transport management server;
a step of receiving the quantity under transport from the transport management server; and
a step of calculating a quantity of the goods among the quantity under transport by using the delivery information.

7. A stock planning method according to claim 4, further comprising a step of transmitting to the production management server a re-order request including the requested re-order quantity and the goods identification information.

8. A stock planning method according to claim 7, further comprising a step of receiving an actual transport period of the goods to be changed by production instruction from the transport management server, wherein said step of inputting the demand quantity moving average inputs the transport period as the lead time.

9. A stock planning method according to claim 1, wherein:

said step of inputting the demand quantity moving average inputs a forecast demand quantity moving average after a predetermined period; and
said step of calculating the quantity of necessary stock calculates a quantity of necessary stock after the predetermined period by using the forecast demand quantity moving average.

10. A stock planning method according to claim 9, wherein said step of inputting the demand quantity moving average inputs as the forecast demand quantity moving average a demand quantity moving average before a predetermined period.

11. A stock planning method according to claim 8, wherein:

said step of inputting the demand quantity moving average inputs the demand quantity moving average after the lead time as the forecast demand quantity moving average after the predetermined period; and
said step of calculating the quantity of necessary stock calculates a quantity of necessary stock by using the demand quantity moving average after the lead time and taking into consideration a delay of a transport period.

12. A stock planning system for creating a stock plan of goods to be distributed on a distribution route, the system comprising:

a first input apparatus for receiving an input of a planning cycle and a lead time of the goods entered by user;
a second input apparatus for receiving an input of a demand quantity moving average during a predetermined period constituting a preset moving average period of the goods, the demand quantity moving average being an average of actual demand quantities indicating demand quantities of the goods during the preset moving average period;
a storage device storing a predetermined program for making the stock planning system to execute predetermined processes; and
a processing apparatus (100) connected to said first and second input apparatuses and said storage device, said processing apparatus calculating a safety stock coefficient indicating a probability of not lacking goods by using a service factor indicating a probability of not lacking goods, and calculating a quantity of necessary stock of the goods required by the distribution route by using a sum of the planning cycle and the lead time, the demand quantity moving average, the standard deviation and the safety stock coefficient.

13. A stock planning system according to claim 12 further comprising a connection apparatus connected via a network (500) to a sales management server (400) for managing sales of the goods, wherein said second input apparatus:

includes a transmitter for transmitting to the sales management server request information including goods identification information for identifying the goods and the moving average period, the request information requesting an actual demand quantity during the moving average period of the goods, and a receiver for receiving from the sales management server the actual demand quantity; and
calculates the demand quantity moving average by using the actual demand quantity.

14. A stock planning system according to claim 12, wherein said processing apparatus calculates an effective stock quantity on the distribution route, and calculates a requested re-order quantity by subtracting the effective stock quantity from the quantity of necessary stock.

15. A stock planning system according to claim 14, further comprising a connection apparatus connected via a network to a production management server (200) for managing production of the goods and a transport management server (300) for managing transport of the goods, wherein said processing apparatus:

calculates the effective stock quantity by receiving partial effective stock quantities from the production management server, the transport management server and the sales management server (400) and adding the received partial effective stock quantities.

16. A stock planning system according to claim 15, wherein said processing apparatus calculates the effective stock quantity including a remaining order which includes a quantity instructed to be ordered by the sales management server (400) and a quantity instructed to be produced by the production management server (200).

17. A stock planning system according to claim 16, wherein said processing apparatus:

requests delivery information on delivery of goods corresponding to the goods identification information to a transport organization from the production management server(200), the delivery information including delivery identification information for identifying the delivery;
receives from the production management server the delivery information responding to the request;
requests a quantity under transport corresponding to the delivery identification information from the transport management server (300);
receives the quantity under transport from the transport management server; and
calculates a quantity of the goods among the quantity under transport by using the delivery information.

18. A stock planning system according to claim 15, wherein said processing apparatus transmits via the connection apparatus to the production management server (200) a re-order request including the requested re-order quantity and the goods identification information.

19. A stock planning system according to claim 18, wherein said processing apparatus receives an actual transport period of the goods to be changed by production instruction from the transport management server, and inputs via the connection apparatus the transport period as the lead time.

20. A stock planning system according to claim 12, wherein:

said second input apparatus inputs a forecast demand quantity moving average after a predetermined period; and
said processing apparatus calculates a quantity of necessary stock after the predetermined period by using the forecast demand quantity moving average.

21. A stock planning system according to claim 20, wherein said second input apparatus inputs as the forecast demand quantity moving average a demand quantity moving average before a predetermined period.

22. A stock planning system according to claim 19, wherein:

said second input apparatus inputs the demand quantity moving average after the lead time as the forecast demand quantity moving average after the predetermined period; and
said processing apparatus calculates a quantity of necessary stock by using the demand quantity moving average after the lead time and taking into consideration a delay of a transport period.

23. A program capable of being stored in a storage medium readable by a computer, the program making the computer execute a stock planning method of creating a stock plan of goods to be distributed on a distribution route, the program comprising the steps of any of claims 1 to 11.

FIG.1

EP 1 357 497 A1

STOCK PLANNING SERVER — 100

110 — ACTUAL SALES DB

STOCK PLANNING TABLE — 120

130 — DELIVERY DB

SAFETY STOCK COEFFICIENT CALCULATION TABLE — 150

160 — SAFETY STOCK COEFFICIENT CORRECTION TABLE

STOCK PLANNING PROGRAM — 140

500

210 — PRODUCTION PLAN - ACTUAL PRODUCTION DB

PROGRAM — 220

PRODUCTION MANAGEMENT SERVER — 200

SALES MANAGEMENT SERVER — 400

ACTUAL SALES DB — 410

STOCK MANAGEMENT DB — 420

PROGRAM — 430

310 — TRANSPORT MANAGEMENT DB

320 — TRUCKING PROGRAM

TRANSPORT MANAGEMENT SERVER — 300

TRUCK TERMINAL — 350-1

TRUCK TERMINAL — 350-2

# FIG.2

STOCK
PLANNING SERVER 100

PRODUCTION
MANAGEMENT SERVER 200

TRANSPORT
MANAGEMENT SERVER 300

TRUCK TERMINAL 350

SALES
MANAGEMENT SERVER 400

INPUT OF PLANNING
CYCLE C 10, LEAD TIME
L 20, SERVICE FACTOR
s 30, AND MOVING
AVERAGE PERIOD tm 40 ~1000

1002

REQUEST ACTUAL
DEMAND QUANTITY ~1001

GOODS ID 90, MOVING AVERAGE PERIOD tm 40

CALCULATE ACTUAL
DEMAND QUANTITY
FROM ACTUAL
SALES DB 410

RECEIVE ACTUAL
DEMAND QUANTITY ~1004

ACTUAL DEMAND QUANTITY

TRANSMIT ACTUAL
DEMAND QUANTITY

1003

CALCULATE DEMAND
QUANTITY MOVING
AVERAGE Qd 15 FROM
ACTUAL DEMAND QUANTITY ~1005

1007

TREND
CORRECTION
NECESSARY ? — NO

YES — 1008

TREND CORRECTION

(1)

EP 1 357 497 A1

11

# FIG.3

ACTUAL SALES DB 410

| | 411 | 412 | 413-1 | 413-2 | 413-3 | | 414-1 | | 415 |
|---|---|---|---|---|---|---|---|---|---|
| GOODS NAME | GOODS ID | JANUARY, 1 | JANUARY, 2 | JANUARY, 3 | --- | 1ST WEEK | JANUARY...... 52ND WEEK | TOTAL |
| 123 FAX | A-123 | 11 | --- | --- | --- | 51 | --- | 1000 |
| 567 PHONE | B-123 | 10 | --- | --- | --- | 50 | --- | 900 |
| ⋮ | ⋮ | ⋮ | ⋮ | ⋮ | ⋮ | ⋮ | ⋮ | ⋮ |

# FIG.4

STOCK MANAGEMENT DB 420

| 421 | 422 | 423 | 424 | 425 | 426 | 426-a | 426-b |
|---|---|---|---|---|---|---|---|
| ORDER ID | ORDER DATE | GOODS ID | ORDER QUANTITY | ARRIVAL DATE | STOCK IN HAND | DETAIL OF STOCK IN HAND | |
| | | | | | | ARRIVED | SALABLE |
| h-567 | JANUARY, 1 | A-123 | 20 | FEBRUARY, 1 | 300 | 50 | 250 |
| --- | --- | --- | --- | --- | --- | --- | --- |

# FIG.5

PAST ACTUAL SALES DB 110

| GOODS NAME<br>111 | GOODS ID<br>112 | DECEMBER, 1<br>113-1 | DECEMBER, 2<br>113-2 | DECEMBER, 3<br>113-3 | --- | 47TH WEEK<br>114-1 | DECEMBER......<br>52ND WEEK | TOTAL<br>115 |
|---|---|---|---|---|---|---|---|---|
| 123 FAX | A-123 | 8 | --- | --- | --- | 51 | --- | 850 |
| 567 PHONE | B-123 | 9 | --- | --- | --- | 50 | --- | 1000 |
| ⋮ | ⋮ | ⋮ | ⋮ | ⋮ | ⋮ | ⋮ | ⋮ | ⋮ |

# FIG.6

DELIVERY DB 130

| DELIVERY QUANTITY<br>131 | DELIVERY<br>INSTRUCTION ID<br>132 | GOODS ID<br>133 |
|---|---|---|
| 20 | 0051 | A-123 |
| --- | --- | --- |

EP 1 357 497 A1

# FIG.7

STOCK PLANNING TABLE 120

| GOODS ID (121) | Qd (122) | σd (123) | k (124) | L (125) | C (126) | ACTUAL DEMAND QUANTITY Qd(i) (127) | RE-ORDER QUANTITY I-h (128) | UNDER PRODUCTION PLANNING (129-a) | UNDER PARTS ORDER (129-b) | UNDER PRODUCTION (129-c) | PRODUCTION END (129-d) | UNDER DELIVERY/ TRANSPORT (129-e) | SALES SHOP ARRIVED QUANTITY (129-f) | SALABLE QUANTITY (129-g) | EFFECTIVE STOCK QUANTITY (129) |
|---|---|---|---|---|---|---|---|---|---|---|---|---|---|---|---|
| A-123 | 50 | 0.5 | 0.01 | 3 | 4 | 51 | 27 | 20 | 11 | 9 | 10 | 20 | 5 | 15 | 90 |
| ... | ... | ... | ... | ... | ... | ... | ... | ... | ... | ... | ... | ... | ... | ... | ... |
| | | | | | | | | | | | | | | | |

EP 1 357 497 A1

# FIG.8

| KURTOSIS | | σ d/Qd | | | | | | | | | | | |
|---|---|---|---|---|---|---|---|---|---|---|---|---|---|
| | | 0.1 | 0.2 | 0.3 | 0.4 | 0.5 | 0.6 | 0.7 | 0.8 | 0.9 | 1.0 | 1.1 | 1.2 |
| | 10 | 1.95 | 1.90 | 1.87 | 1.85 | 1.83 | 1.80 | 1.75 | 1.70 | 1.65 | 1.60 | 1.55 | 1.50 |
| | 9 | 1.93 | 1.88 | 1.85 | 1.83 | 1.81 | 1.78 | 1.73 | 1.68 | 1.63 | 1.58 | 1.53 | 1.48 |
| | 8 | 1.91 | 1.86 | 1.83 | 1.81 | 1.79 | 1.76 | 1.71 | 1.66 | 1.61 | 1.56 | 1.51 | 1.46 |
| | 7 | 1.89 | 1.84 | 1.81 | 1.79 | 1.77 | 1.74 | 1.69 | 1.64 | 1.59 | 1.54 | 1.49 | 1.44 |
| | 6 | 1.87 | 1.82 | 1.79 | 1.77 | 1.75 | 1.72 | 1.67 | 1.62 | 1.57 | 1.52 | 1.47 | 1.42 |
| | 5 | 1.85 | 1.80 | 1.77 | 1.75 | 1.73 | 1.70 | 1.65 | 1.60 | 1.55 | 1.50 | 1.45 | 1.40 |
| | 4 | 1.83 | 1.78 | 1.75 | 1.73 | 1.71 | 1.68 | 1.63 | 1.58 | 1.53 | 1.48 | 1.43 | 1.38 |
| | 3 | 1.81 | 1.76 | 1.73 | 1.71 | 1.69 | 1.66 | 1.61 | 1.56 | 1.51 | 1.46 | 1.41 | 1.36 |
| | 2 | 1.79 | 1.74 | 1.71 | 1.69 | 1.67 | 1.64 | 1.59 | 1.54 | 1.49 | 1.44 | 1.39 | 1.34 |
| | 1 | 1.77 | 1.72 | 1.64 | 1.64 | 1.64 | 1.62 | 1.57 | 1.52 | 1.47 | 1.42 | 1.37 | 1.32 |
| | 0 | 1.75 | 1.70 | 1.64 | 1.64 | 1.64 | 1.60 | 1.55 | 1.50 | 1.45 | 1.40 | 1.35 | 1.30 |
| | -1 | 1.73 | 1.68 | 1.64 | 1.64 | 1.64 | 1.58 | 1.53 | 1.48 | 1.43 | 1.38 | 1.33 | 1.28 |

EP 1 357 497 A1

# FIG.9

PRODUCTION PLAN - ACTUAL PRODUCTION DB 210

| GOODS ID | ORDER ID (RECEIVED ORDER ID) | ORDER DATE | ORDER QUANTITY | DETAIL OF ORDER QUANTITY | | | | | | DETAIL OF DELIVERED | | |
|---|---|---|---|---|---|---|---|---|---|---|---|---|
| | | | | UNDER PRODUCTION PLANNING | UNDER PARTS ORDER | UNDER PRODUCTION | PRODUCTION END | DELIVERED | | DELIVERY ID | DELIVERY QUANTITY | UNDER DELIVERY |
| A-123 | h-567 | JANUARY, 1 | 70 | 20 | 11 | 9 | 10 | 20 | | 0051 | 10 | 10 |
| ... | ... | ... | ... | ... | ... | ... | ... | ... | | ... | ... | ... |

# FIG.10

TRANSPORT MANAGEMENT DB 310

| DELIVERY INSTRUCTION ID | GOODS RECEIVING ID | TRUCK ID | RECEIVING DATE | RECEIVING QUANTITY | DELIVERY SOURCE | DELIVERY DESTINATION | DELIVERED ? |
|---|---|---|---|---|---|---|---|
| 0051 | ZX-001 | t-001 | 2002/4/1 | 20 | MAKER A | SALES COMPANY C | ◯ |
| ... | ... | ... | ... | ... | ... | ... | ... |

EP 1 357 497 A1

# FIG.11

| STOCK PLANNING SERVER 100 | PRODUCTION MANAGEMENT SERVER 200 | TRANSPORT MANAGEMENT SERVER 300 | TRUCK TERMINAL 350 | SALES MANAGEMENT SERVER 400 |
|---|---|---|---|---|

①

CALCULATE STANDARD DEVIATION σ d 60 OF DEMAND QUANTITY MOVING AVERAGE Qd 15 — 1009

CALCULATE SAFETY COEFFICIENT k 70 CORRESPONDING TO SERVICE FACTOR s 30 BY USING SAFETY COEFFICIENT CALCULATION TABLE 150 — 1010

1011

CORRECTION OF SAFETY STOCK COEFFICIENT k NECESSARY ? — NO

YES

1012

CORRECT SAFETY STOCK COEFFICIENT k BY USING SAFETY STOCK COEFFICIENT CORRECTION TABLE 160

CALCULATE QUANTITY OF NECESSARY STOCK $I = Qd(L+C) + k\sqrt{(L+C)} \cdot \sigma d$ — 1013

②

EP 1 357 497 A1

# FIG.12

EP 1 357 497 A1

| STOCK PLANNING SERVER 100 | PRODUCTION MANAGEMENT SERVER 200 | TRANSPORT MANAGEMENT SERVER 300 | TRUCK TERMINAL 350 | SALES MANAGEMENT SERVER 400 |
|---|---|---|---|---|

② 

GOODS ID 90 →

CALCULATE ACTUAL STOCK AT SALES SITE BY USING STOCK MANAGEMENT DB 420

1017

REQUEST ACTUAL STOCK

GOODS ID 90 →

CALCULATE ACTUAL STOCKS AT PRODUCTION SITE BY USING PRODUCTION PLAN - ACTUAL PRODUCTION DB 210 — 1015

1014

1019

ACTUAL STOCK

TRANSMIT ACTUAL STOCK AT PRODUCTION SITE — 1016

RECEPTION OF ACTUAL STOCK

ACTUAL STOCK

TRANSMIT ACTUAL STOCK AT SALES SITE

1018

REQUEST DELIVERY DATA INCLUDING DELIVERY INSTRUCTION NO

GOODS ID 90 →

CALCULATE DELIVERY INSTRUCTION NO BY USING PRODUCTION PLAN - ACTUAL PRODUCTION DB — 1021

1024

TRANSPORT INFORMATION

1020 1023

DELIVERY INSTRUCTION NO

TRANSMIT DELIVERY INSTRUCTION NO — 1022

COLLECT TRANSPORT INFORMATION INCLUDING DELIVERY QUANTITY BY USING TRUCKING PROGRAM

TRANSPORT INFORMATION REQUEST

DELIVERY INSTRUCTION NO →

TRANSPORT INFORMATION

CALCULATE DELIVERY QUANTITY OF GOODS ID BY USING DELIVERY DATA — 1026

TRANSPORT INFORMATION

TRANSMIT TRANSPORT INFORMATION — 1025

③

# FIG.13

| STOCK PLANNING SERVER 100 | PRODUCTION MANAGEMENT SERVER 200 | TRANSPORT MANAGEMENT SERVER 300 | TRUCK TERMINAL 350 | SALES MANAGEMENT SERVER 400 |
|---|---|---|---|---|

③

CALCULATE EFFECTIVE STOCK QUANTITY FROM NUMBERS RECEIVED AT STEPS 1019 AND 1026 —1027

CALCULATE REQUESTED RE-ORDER QUANTITY BY SUBTRACTING EFFECTIVE STOCK QUANTITY FROM NECESSARY STOCK QUANTITY I —1028

1029

REQUESTED RE-ORDER QUANTITY IS NECESSARY TO BE CORRECTED ?   NO

YES   1030

CORRECT REQUESTED RE-ORDER QUANTITY

INSTRUCT REQUESTED RE-ORDER QUANTITY

1031

(GOODS ID, REQUESTED RE-ORDER QUANTITY)

INSTRUCT PRODUCTION/ DELIVERY AS INSTRUCTED, WRITE INTO DB —1032

RETURN TO STEP 1000 —1033

EP 1 357 497 A1

**European Patent Office**

## DECLARATION

which under Rule 45 of the European Patent Convention shall be considered, for the purposes of subsequent proceedings, as the European search report

Application Number

EP 02 01 8909

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---
-----

| Place of search | Date | Examiner |
|---|---|---|
| THE HAGUE | 14 November 2002 | Bowler, A |

EPO FORM 1504 (P04C37)